(19) **Europäisches Patentamt**
**European Patent Office**
**Office européen des brevets**

(11) **EP 4 471 732 A1**

(12) **EUROPEAN PATENT APPLICATION**

(43) Date of publication:
**04.12.2024 Bulletin 2024/49**

(21) Application number: **23176815.1**

(22) Date of filing: **01.06.2023**

(51) International Patent Classification (IPC):
**G06V 10/82** (2022.01)    **G06N 3/045** (2023.01)

(52) Cooperative Patent Classification (CPC):
**G06V 10/82; G06N 3/0495; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Sakmann, Kaspar**
**1020 Wien (AT)**
• **Zhang, Dan**
**71229 Leonberg (DE)**

(54) **DEVICE AND COMPUTER IMPLEMENTED METHOD FOR EVALUATING A DIGITAL IMAGE**

(57)    Device and computer implemented method for evaluating a digital image, wherein the method comprises providing the digital image (202), providing (204) a first part of a predetermined model, wherein the predetermined model is configured for determining a semantic segmentation of the digital image with a second part of the predetermined model, wherein the first part is configured to determine a feature depending on the digital image, wherein the second part is configured to determine the semantic segmentation depending on the feature, wherein the method comprises determining (208) the feature depending on the digital image with the first part, providing (206) a set of quantizations for quantizing the feature, determining (210) the quantization of the feature depending on the set of quantizations and depending on the feature, determining (212) a quantization error depending on the feature and the quantization, and evaluating (216) the digital image depending on the quantization error.

**Fig. 2**

EP 4 471 732 A1

**Description**

Background

The invention relates to a device and a computer-implemented method for evaluating a digital image.
Digital images are evaluated for example in the field of at least partially autonomous vehicles or automated optical inspection devices.

Disclosure of the invention

The device and computer implemented method for evaluating a digital image according to the independent claims provide a simple score to classify digital images.
The method comprises providing the digital image, providing a first part of a predetermined model, wherein the predetermined model is configured for determining a semantic segmentation of the digital image with a second part of the predetermined model, wherein the first part is configured to determine a feature depending on the digital image, wherein the second part is configured to determine the semantic segmentation depending on the feature, wherein the method comprises determining the feature depending on the digital image with the first part, providing a set of quantizations for quantizing the feature, determining the quantization of the feature depending on the set of quantizations and depending on the feature, determining a quantization error depending on the feature and the quantization, and evaluating the digital image depending on the quantization error. The feature and the quantization may be vectors. The quantization error may be a distance between the vectors that serves as the simple score to evaluate the digital image.
The method may comprise providing the second part of the model, wherein the second part is configured for determining the semantic segmentation of the digital image depending on the quantization, and determining the semantic segmentation of the digital image depending on the quantization with the second part. The score that is provided in addition to the semantic segmentation allows evaluating the semantic segmentation.
In one embodiment, providing the set of quantizations comprises providing a reference for the semantic segmentation of the digital image, determining the semantic segmentation of the digital image, and determining a quantization in the set of quantizations depending on a difference between the reference and the semantic segmentation and depending on the quantization error. The first part and the second part are predetermined parts of the predetermined model. The quantization is determined without modifying the first part or the second part.
In one embodiment, providing the pretrained model comprises training the first part to determine the feature and the second part to determine the semantic segmentation depending on the feature. The set of quantizations is inserted into the pretrained model between the pretrained first part and the pretrained second part.
In one embodiment, the method comprises determining the feature with a predetermined normalization, and determining the quantization for the feature with the predetermined normalization. The normalization normalizes the feature and the quantization in the same way in order to facilitate the determination of the quantization error. The vectors representing feature and quantization may be normalized to unit length.
In one embodiment, the method comprises upscaling the feature from a first scale to a second scale, determining the quantization in the second scale from the feature in the second scale, downscaling the quantization from the second scale to the first scale and determining the quantization error in the first scale. The change of the resolution may improve accuracy.
Preferably, the feature is a vector and the quantization of the feature is a vector, wherein determining the quantization error comprises determining a cosine distance between the feature and the quantization of the feature.
Providing the digital image may comprise capturing the digital image in particular with a camera of an at least partially autonomous vehicle or an automated optical inspection device.
Evaluating the digital image may comprise detecting an anomaly if the quantization error exceeds a threshold or not detecting the anomaly otherwise.
The device for evaluating the digital image comprises at least one processor and at least one storage for storing the digital image and instructions that, when executed by the at least one processor, cause the at least one processor to execute the method, wherein the at least one processor is configured for executing the instructions. The device provides advantages that correspond to the advantages the method provides.
A program may be provided, wherein the program comprises instructions that, when executed by at least one processor, cause the at least one processor to execute the method. The program provides advantages that correspond to the advantages the method provides.
Further embodiments are derived from the following description and the drawing. In the drawing:

Fig. 1  schematically depicts a device for evaluating a digital image,
Fig. 2  depicts steps in a method for evaluating a digital image.

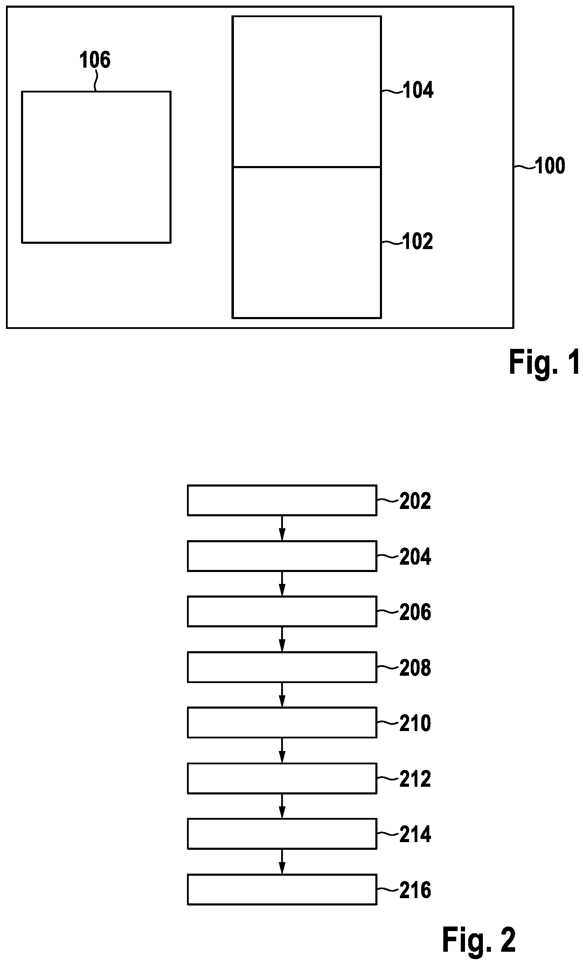

Figure 1 depicts schematically a device 100 for evaluating a digital image x.

The digital image is for example a video image, radar image, LiDAR image, ultrasonic image, motion image, thermal image.

The device 100 comprises at least one processor 102 and at least one storage 104 for storing the digital image x and instructions.

The instructions cause the at least one processor 102 to execute a method for evaluating the digital image x, when executed by the at least one processor 102.

The at least one processor 102 is configured for executing the instructions.

The device 100 may comprise a camera 106 or an interface for receiving a digital image from the camera 106.

A program may comprise the instructions.

The method for evaluating the digital image x comprises a step 202.

In the step 202, the digital image x is provided.

Providing the digital image x may comprise capturing the digital image x.

According to an example, the digital image x is captured with the camera 106.

The camera 106 is for example part of or mounted to an at least partially autonomous vehicle or an automated optical inspection device.

The method comprises a step 204.

In step 204, a predetermined model $\tilde{G}$ is provided.

The predetermined model $\tilde{G} = D \circ F$ comprises a first part F and a second part D.

In the example, the predetermined model $\tilde{G}$ is a pretrained semantic segmentation network, i.e. an artificial neural network.

The predetermined model $\tilde{G}$ is for example determined in a training based on a data set $X = \{x_i, y_i\}_{i=1,...,N}$ comprising N input images $x_i \in [0,1]^{C_{in} \times H \times W}$ with corresponding annotations $y_i \in (0, ..., N_c - 1)^{H \times W}$, respectively, where $N_c$ is the number of classes, that the network can assign in a semantic segmentation $y$.

The second part D comprises a last layer of the network $\tilde{G}$. The first part F comprises the other layers of the network $\tilde{G}$.

The first part is configured to determine a feature $z_e = F(x)$ depending on the digital image x.

The predetermined model $\tilde{G}$ is configured for determining the semantic segmentation $\hat{y}$ of the digital image x with the second part D.

The second part D is configured to determine the semantic segmentation $\hat{y}$ depending on the feature $z_e$.

Providing the pretrained model may comprise training the first part F to determine the feature $z_e$ and the second part D to determine the semantic segmentation $\hat{y}$ depending on the feature $z_e$.

The method comprises a step 206.

The step 206 comprises providing a predetermined set of quantizations $\tilde{Q}$ for quantizing the feature $z_e$.

The method comprises a step 208.

In the step 208, the feature $z_e$ is determined depending on the digital image x with the first part F.

The feature $z_e$ is for example determined with a predetermined normalization N.

The method comprises a step 210.

In the step 210, a quantization $z_q$ of the feature $z_e$ is determined depending on the set of quantizations $\tilde{Q}$ and depending on the feature $z_e$.

The quantization $z_q$ for the feature $z_e$ is for example determined with the predetermined normalization N:

$$z_q = Q(z_e)$$

with the normalized set of quantizations

$$Q = \tilde{Q}N$$

The method comprises a step 212.

In the step 212, a quantization error

$$E_{quant} = \left\| z_q - z_e \right\|_2^2$$

is determined depending on the feature $z_e$ and the quantization $z_q$.

According to an example, the feature $z_e$ is a vector and the quantization $z_q$ of the feature $z_e$ is a vector. In the example, the feature $z_e$ has the same dimension as the quantization $z_q$.

According to an example, determining the quantization error comprises determining a cosine distance between the feature $z_e$ and the quantization $z_q$ of the feature $z_e$.

The method comprises a step 214.

In the step 214, the semantic segmentation $\hat{y}$ of the digital image x is determined depending on the quantization $z_q$ with the second part D.

In one example, the semantic segmentation $\hat{y}$ is determined with the normalized set of quantizations Q:

$$\hat{y} = G = D\left(Q\big(F(x)\big)\right)$$

In one example, the semantic segmentation $\hat{y}$ is determined with the set of quantizations $\tilde{Q}$:

$$\hat{y} = G = D\left(Q\big(F(x)\big)\right)$$

G denominates an amended model resulting from adding the set of quantizations $\tilde{Q}$ or the normalized set of quantizations Q to the predetermined model $\tilde{G}$.

The second part D is configured for determining the semantic segmentation $\hat{y}$ of the digital image x depending on a quantization $z_q$ of the feature $z_e$. In the example, the dimensions of the quantization $z_q$ and the feature $z_e$ are the same.

The method comprises a step 216.

In the step 216, the digital image x is evaluated depending on the quantization error $E_{quant}$.

Evaluating the digital image may comprise detecting an anomaly if the quantization error $E_{quant}$ exeeds a threshold or not detecting the anomaly otherwise.

The quantization error is in one example used as a signal for determining whether a region in the digital image is anomalous or nominal.

The step 216 may comprise triggering an action when the anomaly is detected. The step 216 may comprise triggering an action when the absence of the anomaly is detected.

The action may be an emergency braking of the vehicle or alerting a user of the anomaly. The action may be actively selecting the digital image for transmission to a back-end computer for further processing or not selecting it for that purpose.

Further processing may comprise machine learning with the digital image or testing, verifying or validating a machine learning system with the digital image.

The action may be capturing another digital image without forwarding the digital image in case the anomaly is detected or directly transmitted the evaluated digital image in particular to a back-end otherwise.

The action may be sorting out the evaluated digital image for labelling in case the anomaly is detected.

The step 214 is in the example executed to determine the semantic segmentation $\hat{y}$ and the evaluation regarding the existence or absence of an anomaly in the digital image x.

The step 214 may be omitted in order to evaluate the existence or absence of an anomaly based on the quantization error $E_{quant}$.

The amended model G represents an anomaly segmentation system.

A use case for this evaluation is to distinguish outliers from nominal data in semantic segmentations of digital images. This is particularly useful in safety relevant applications such as autonomous driving.

For example, the semantic segmentation is provided for detecting a presence of an object representing a road surface, a pedestrian, a vehicle. An outlier in may be an unknown object.

A use cases for this evaluation is to classify outliers from nominal data in automated optical inspection.

In one example, the set of quantizations $\tilde{Q}$ or the normalized set of quantizations Q is provided as a module. The module is inserted in an existing neural network that is already trained for semantic segmentation as a penultimate layer of the neural network.

The set of quantizations $\tilde{Q}$ or the normalized set of quantizations Q may be added to another layer of the neural network.

Preferably, a vector quantization layer representing the set of quantizations $\tilde{Q}$ or the normalized set of quantizations Q is added.

The trained vector quantization layer is used to detect anomalies, e.g. by flagging input data as anomalous if its quantization error, i.e. a vector quantizer determined by the vector quantization layer, is above the given threshold.

In one example, the only parameters that are retrained are those of he set of quantizations $\tilde{Q}$ or the normalized set of quantizations Q. These are typically much fewer parameters than the entire neural network. Thereby it becomes possible to incorporate the module for an outlier detection into an already trained neural network.

In one example, the amended model G is fine-tune or the last layer, i.e. a classifier layer of the amended model G is retrained to further improve the performance.

The method may comprise upscaling the feature $z_e$ from a first scale to a second scale, determining the quantization $z_q$ in the second scale from the feature $z_e$ inthe second scale, downscaling the quantization $z_q$ from the second scale to the first scale and determining the quantization error $E_{quant}$ in the first scale.

The amended model may be trained in a training with training data.

The training may comprise determining parameters that define the set of quantizations $\tilde{Q}$ and/or the normalization N. Preferably, the training comprises determining the parameters that define the set of quantizations $\tilde{Q}$ and/or the normalization N without modifying the first part and/or the second part of the predetermined model.

The training data may comprise pairs of a reference $y^{(k)}$ for the semantic segmentation $\hat{y}^{(k)}$ and a digital image $x_k$. The reference $y^{(k)}$ is for example a one hot-encoding of the label y.

Providing the set of quantizations $\hat{Q}$ in the training comprises:

providing a digital image $x_k$ and reference $y^{(k)}$ for a semantic segmentation 51(k) of the digital image $x_k$,

determining the semantic segmentation $\hat{y}^{(k)}$ of the digital image $x_k$ with the amended model G,

determining the a quantization q in the set of quantizations $\tilde{Q}$ depending on a difference between the reference $\hat{y}^{(k)}$ and the semantic segmentation $\tilde{y}^{(k)}$ and depending on a loss function that comprises a cross entropy-loss

$$L_{CE} = \sum_{k=0}^{N_C-1} y^{(k)} log\, \hat{y}^{(k)}$$

and a quantization error loss

$$L_{quant} = \left\| sq[z_e(x_k)] - z_q \right\|_2^2 + \beta \left\| z_e(x_k) - sq[z_q] \right\|_2^2$$

wherein $sq[\cdot]$ denotes a stop gradient operation and $\beta$ is a parameter that controsl the update rate of the encoding parameters compared to updates of the set of parameters. An example is $\beta = 0.25$.

The digital image comprises pixel boundaries between classes that are assigned in the semantic segmentation.

The set of quantizations $\tilde{Q}$ according to one example is a codebook comprising codebook vectors, i.e. the vectors in the set of quantizations $\tilde{Q}$.

Pixel boundaries between classes are for example regions with large quantization errors $E_{quant}$, due to the absence of nearby codebook vectors.

This can cause large false positive rates in anomaly prediction. To mitigate this the amended model G may be trained depending on an additional loss term, a boundary loss $L_{boundary}$, that overweighs the quantization error $E_{quant}$ on the class boundaries during training and encourages the allocation of codebook vectors on the class boundary.

Note that logit-based uncertainty methods cannot avoid larger uncertainties and thus anomaly scores when traversing pixel boundaries between classes, due to the continuity of the output of the network.

Let $m_i$ denote an appropriately resized binary mask of class boundaries of the reference $y$, i.e. $m=1$ on class boundary regions and zero elsewhere. The boundary loss $L_{boundary}$ is then defined by:

$$L_{boundary} = m \odot E_{quant}$$

wherein $\odot$ denotes the pointwise product. The amended model G is trained using for example the loss function:

$$L = \alpha L_{CE} + L_{quant} + \lambda\, L_{boundary}$$

wherein $\alpha$, $\lambda$ and $\beta$ are hyperparameters. An anomaly score is for example computed from the $E_{quant}$ scaled up to the second resolution.

The decision of whether to classify a pixel as an outlier is decided for example from whether its quantization error $E_{quant}$ lies above or below the threshold. A value t of the threshold is for example $0 \leq t \leq 1$.

According to one example, the amended model G is a neural network comprising the normalized quantization Q. The neural network that is trained with the loss function $L$. The threshold $t$ is selected to determine the sensitivity. During inference a digital image is passed through the neural network. At the layer representing the normalized quantization the quantization error $E_{quant}$ is computed. Pixels that correspond to a quantization error $E_{quant} > t$ are labelled as anomalous, the remaining pixels as nominal. The quantization error $E_{quant}$ may be upscaled to the original image resolution.

A neural network comprising the set of quantizations $\tilde{Q}$ instead of the normalized quantization Q is processed alike.

**Claims**

1. Computer implemented method for evaluating a digital image, **characterized by** providing the digital image (202), providing (204) a first part of a predetermined model, wherein the predetermined model is configured for determining a semantic segmentation of the digital image with a second part of the predetermined model, wherein the first part is configured to determine a feature depending on the digital image, wherein the second part is configured to determine the semantic segmentation depending on the feature, wherein the method comprises determining (208) the feature depending on the digital image with the first part, providing (206) a set of quantizations for quantizing the feature, determining (210) the quantization of the feature depending on the set of quantizations and depending on the feature, determining (212) a quantization error depending on the feature and the quantization, and evaluating (216) the digital image depending on the quantization error.

2. The method according to claim 1, **characterized by** providing (204) the second part of the model, wherein the second part is configured for determining the semantic segmentation of the digital image depending on the quantization, and determining (214) the semantic segmentation of the digital image depending on the quantization with the second part.

3. The method according to claim 2, **characterized in that** providing (206) the set of quantizations comprises providing a reference for the semantic segmentation of the digital image, determining the semantic segmentation of the digital image, and determining a quantization in the set of quantizations depending on a difference between the reference and the semantic segmentation and depending on the quantization error.

4. The method according to one of the previous claims, wherein providing (204) the pretrained model comprises training the first part to determine the feature and the second part to determine the semantic segmentation depending on the feature.

5. The method according to one of the previous claims, **characterized in that** the method comprises determining (208) the feature with a predetermined normalization, and determining the quantization for the feature with the predetermined normalization.

6. The method according to one of the previous claims, **characterized in that** the method comprises upscaling the feature from a first scale to a second scale, determining the quantization in the second scale from the feature in the second scale, downscaling the quantization from the second scale to the first scale and determining the quantization error in the first scale.

7. The method according to one of the previous claims, **characterized in that** the feature is a vector and the quantization of the feature is a vector, wherein determining (212) the quantization error comprises determining a cosine distance between the feature and the quantization of the feature.

8. The method according to one of the previous claims, **characterized in that** providing (202) the digital image comprises capturing the digital image in particular with a camera of an at least partially autonomous vehicle or an automated optical inspection device.

9. The method according to one of the previous claims, **characterized in that** evaluating (216) the digital image comprises detecting an anomaly if the quantization error exceeds a threshold or not detecting the anomaly otherwise.

10. Device (100) for evaluating a digital image, **characterized in that** the device (100) comprises at least one processor (102) and at least one storage (104) for storing the digital image and instructions that, when executed by the at least one processor (102), cause the at least one processor (102) to execute the method according to one of the claims 1 to 9, wherein the at least one processor (102) is configured for executing the instructions.

11. Program, **characterized in that** the program comprises instructions that, when executed by at least one processor, cause the at least one processor to execute the method according to one of the claims 1 to 9.

**Fig. 1**

**Fig. 2**

Europäisches
Patentamt

European
Patent Office

Office européen
des brevets

## EUROPEAN SEARCH REPORT

**Application Number**

EP 23 17 6815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 120 136 A1 (VOLKSWAGEN AG [DE]) 18 January 2023 (2023-01-18) * paragraphs [0049], [0051], [0054], [0128], [0131], [0140], [0141], [0172]; figure 3 * | 1-11 | INV. G06V10/82 G06N3/045 |
| A | YUSIONG JOHN PAUL ET AL: "Multi-scale Autoencoders in Autoencoder for Semantic Image Segmentation", ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, vol. 11431 Chap.51, no. 558, 7 March 2019 (2019-03-07), pages 587-599, XP047504730, ISBN: 978-3-319-10403-4 [retrieved on 2019-03-07] * figure 2 * | 1-11 | |
| A | WO 2018/192672 A1 (SIEMENS HEALTHCARE GMBH [DE]) 25 October 2018 (2018-10-25) * paragraph [0052]; figures 2,3,10 * | 9 | TECHNICAL FIELDS SEARCHED (IPC) |
| A | CN 116 051 917 A (TENCENT TECH SHENZHEN CO LTD) 2 May 2023 (2023-05-02) * the whole document * | 1-11 | G06V G06N |

The present search report has been drawn up for all claims

| Place of search | Date of completion of the search | Examiner |
|---|---|---|
| The Hague | 12 October 2023 | Meurisse, Wim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 6815

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | | Publication date | Patent family member(s) | | | Publication date |
|---|---|---|---|---|---|---|
| EP 4120136 | A1 | 18-01-2023 | NONE | | | |
| WO 2018192672 | A1 | 25-10-2018 | CN | 110506278 | A | 26-11-2019 |
| | | | EP | 3612981 | A1 | 26-02-2020 |
| | | | US | 2020020098 | A1 | 16-01-2020 |
| | | | WO | 2018192672 | A1 | 25-10-2018 |
| CN 116051917 | A | 02-05-2023 | NONE | | | |

EPO FORM P0459

For more details about this annex : see Official Journal of the European Patent Office, No. 12/82